# EUROPÄISCHE PATENTANMELDUNG

(11) **EP 1 361 521 A2**
(43) Veröffentlichungstag der Anmeldung: **12.11.2003**
(21) Anmeldenummer: 03007044.5
(22) Anmeldetag: 27.03.2003
(51) Int. Cl.: G06F 15/17

(54) **Verfahren und Vorrichtung zur Übertragung von Daten zwischen zwei Prozessoren einer Datenverarbeitungseinheit**

(30) Priorität: 27.03.2002 DE 10213888
(71) Anmelder: SIEMENS AKTIENGESELLSCHAFT, 80333 München (DE)
(72) Erfinder: Becker, Peter, 76571 Gaggenau (DE)

(57) **Zusammenfassung**

Für eine besonders sichere und chronologische Datenübertragung wird erfindungsgemäß bei einem Verfahren zur Übertragung von Daten (D) zwischen zwei Prozessoren (13a, 13b) einer Datenverarbeitungseinheit (2), wobei kommunikationsseitig einem der Prozessoren (13a) ein dynamischer Speicher (16a bis 16z) und steuerungsseitig dem anderen Prozessor (13b) ein statischer Speicher (18) zugeordnet werden, wobei vom betreffenden kommunikationsseitigen Prozessor (13a) ein Überschreiten der Kapazität des statischen Speichers (18) des anderen steuerungsseitigen Prozessors (13b) identifiziert wird und die betreffenden Daten im dynamischen Speicher (16a bis 16z) des kommunikationsseitigen Prozessors (13a) zum Zwischenspeichern der Daten (D) zugeordnet werden.

## Beschreibung

Die Erfindung betrifft ein Verfahren und eine Vorrichtung zur Übertragung von Daten zwischen zwei Prozessoren einer Datenverarbeitungseinheit einer technischen Anlage, insbesondere einer Kraftwerksanlage.

In einer Kraftwerksanlage sollen Überwachungs- und Informationssysteme die aktuellen Betriebszustände der Anlage erkennbar machen und Abweichungen von einem Sollzustand melden. Dazu ist eine umfangreiche Messwerterfassung und - auswertung der Betriebszustände aller Anlagenteile erforderlich. Mit zunehmender Energie- und/oder Arbeitsausnutzung derartiger Anlagen und mit zunehmender Steigerung ihres Sicherheitsstandards wachsen auch die Anforderungen an das Überwachungs- und Informationssystem hinsichtlich der Verarbeitung, Übertragung und Speicherung großer Datenmengen. Daher werden üblicherweise so genannte Mehrprozessorsysteme verwendet, welche zur Verarbeitung der Daten eine Mehrzahl von Prozessoren umfasst, welche zum Austausch der Daten über eine Datenübertragungseinheit miteinander verbunden sind.

Je nach Art und Ausführung der Datenverarbeitungseinheit sind dieser dabei für die unterschiedlichen Funktionen betreffende Prozessoren zugeordnet. Zum einen ist zur Bearbeitung der Kommunikation auf der Datenübertragungseinheit einer der Prozessoren zum Senden und Empfangen von Daten zwischen einem lokalen und einem zentralen Datenverarbeitungssystem vorgesehen. Ein weiterer Prozessor ist daneben zur Steuerung des Anlagenprozesses der Kraftwerksanlage und somit zu einer besonders schnellen Bearbeitung der Daten vorgesehen. Diese Aufgabenteilung hat zum Ziel, dass die Steuerungsseite zum Prozess entlastet und die Kommunikationsseite bezüglich des Datenaustausches erweitert werden kann.

Aus Kostengründen ist anstelle eines statischen Speichers zur Zwischenspeicherung der zu übertragenden Daten auf der Steuerungsseite kommunikationsseitig ein dynamischer Speicher auf der Kommunikationsseite vorgesehen. Bedingt durch die wachsende Menge von zu übertragenden Daten kommt es steuerungsseitig zu Ressourcenproblemen, wodurch Daten verlorengehen können. Um dies zu vermeiden, wurde üblicherweise ein so genannter Wechselpuffermechanismus verwendet, bei welchem zur gleichen Zeit aus einem statischen Datenspeicher Daten ausgelesen und in einen anderen Datenspeicher Daten geschrieben werden können. Nachteilig dabei ist, dass ein derartiger Wechselpuffermechanismus mindestens zwei statische Speicher umfasst. Insbesondere bei kleinen Automatisierungseinheiten oder Datenverarbeitungseinheiten mit geringen Ressourcen ist ein derartiger Wechselpuffermechanismus nicht einsetzbar.

Der Erfindung liegt daher die Aufgabe zugrunde ein Verfahren zur Übertragung von Daten zwischen zwei Prozessoren einer Datenverarbeitungseinheit anzugeben, bei welcher auch für kleine Datenverarbeitungseinheiten ein sicherer Datenaustausch gewährleistet ist.

Die Aufgabe wird erfindungsgemäß gelöst durch ein Verfahren zur Übertragung von Daten zwischen zwei Prozessoren einer Datenverarbeitungseinheit, wobei kommunikationsseitig einem der Prozessoren ein dynamischer Speicher und steuerungsseitig dem anderen Prozessor ein statischer Speicher zugeordnet werden, wobei vom betreffenden kommunikationsseitigen Prozessor ein Überschreiten der Kapazität des statischen Speichers des anderen steuerungsseitigen Prozessors identifiziert wird und die Daten im dynamischen Speicher des kommunikationsseitigen Prozessors solange zwischengespeichert werden.

Die Erfindung geht dabei von der Überlegung aus, dass eine Übertragung der Daten besonders schnell und zuverlässig und bei möglichst kleinem Speicherbedarf erfolgen soll. Dabei sollte bei einer empfangsseitigen Störung, zum Beispiel bei einem zu geringen Speicherplatz seitens des steuerungsseitigen Prozessors, ein Überschreiben des betreffenden statischen Speichers sicher vermieden sein. Hierzu wird mittels des kommunikationsseitigen Prozessors ein Überschreiten der Kapazität des statischen Speichers identifiziert, wodurch die Übertragung zum steuerungsseitigen Prozessor, insbesondere eine Übertragung der Daten in dessen statischen Speicher, unterbleibt. Gleichzeitig wird der dynamische Speicher des kommunikationsseitigen Prozessors zum Zwischenspeichern der Daten verwendet. Dabei wird die Datenübertragung bevorzugt allein ausgehend vom kommunikationsseitigen Prozessor überwacht und gesteuert. Für eine derartige speicher- und zeitoptimierte Datenübertragung wird mittels des kommunikationsseitigen Prozessors ein diesem zugrunde liegender dynamischer Puffer derart unterteilt, dass ein dynamischer Speicherbereich zum Zwischenspeichern der zu übertragenden Daten bereitgestellt wird. Hierdurch ist sichergestellt, dass bei einer vollen Auslastung der Speicherkapazitäten auf der Steuerungsseite ein Überschreiben der im betreffenden statischen Speicher hinterlegten Daten sicher vermieden ist. Durch die auf der Kommunikationsseite ausgeführte Unterteilung des bereits vorhandenen dynamischen Puffers zum Zwischenspeichern der zu übertragenden Daten wird ein deutlich reduzierter Speicherplatz beansprucht. Aufwändige statische Speicher sind darüber hinaus sicher vermeiden.

Zweckmäßigerweise wird der dynamische Speicher vom kommunikationsseitigen Prozessor adressiert. Mit anderen Worten: Der dynamische Speicher oder Puffer wird von der Kommunikationsseite, insbesondere dessen Prozessor, in Abhängigkeit vom Zustand des statischen Speichers auf der Steuerungsseite verwaltet. Hierdurch ist zum einen der steuerungsseitige Prozessor sowohl speicherbezogen als auch betriebsbezogen möglichst gut entlastet.

Vorzugsweise wird bei einem Überschreiten der Kapazität des statischen Speichers ein Meldesignal gesetzt. Das Meldesignal bleibt so lange gesetzt, bis der statische Speicher auf der Steuerungsseite wieder empfangsbereit ist. Bevorzugt wird das Meldesignal auch bei einem Zugriff einer der beiden Prozessoren auf den statischen Speicher gesetzt. Mittels des kommunikationsseitigen Prozessors kann somit anhand des Meldesignals in besonders einfacher Art und Weise der Zustand des statischen Speichers auf der Steuerungsseite überwacht und identifiziert werden.

Beispielsweise wird mittels des kommunikationsseitigen Prozessors ein Zugriff des steuerungsseitigen Prozessors auf den statischen Speicher .identifiziert, wodurch der kommunikationsseitige Prozessor eine Übertragung der Daten unterlässt bzw. unterbricht und das Meldesignal setzt. Mit anderen Worten: Bei einem gleichzeitigen Zugriff von kommunikationsseitigen und steuerungsseitigen Prozessor auf den statischen Speicher wird ein Konflikt oder eine Störung identifiziert. Hierdurch wird die Datenübertragung in den statischen Speicher unterdrückt, in dem die Daten solange im dynamischen Speicher zwischengespeichert werden, bis der Konflikt behoben ist.

Zweckmäßigerweise wird das Meldesignal vom steuerungsseitigen Prozessor, insbesondere über einen Schnittstellenbaustein, ereignisgesteuert zurückgesetzt. Alternativ wird das Meldesignal nach Ablauf der Bearbeitung des statischen Zwischenspeichers durch den steuerungsseitigen Prozessor, insbesondere nach Ablauf eines Anwenderprogramms oder -bausteins, zurückgesetzt. Somit ist gewährleistet, dass der statische Speicher erst dann wieder zum Empfang von zu übertragenden Daten bereitgestellt wird, wenn mittels des steuerungsseitigen Prozessors die im statischen Puffer hinterlegten, vorangegangenen Daten vollständig ausgelesen sind. Durch die Bereitstellung des dynamischen Speichers auf der Kommunikationsseite für aktuell zu übertragende Daten und den statischen Speicher auf der Steuerungsseite zum Auslesen von vorangegangenen Daten ist sichergestellt, dass die zu übertragenden Daten zeitlich und/oder logisch fortlaufend in die betreffenden Anwendungsmodule der Steuerungsseite übertragen werden. Alternativ können die im statischen Speicher hinterlegten Daten durch nachfolgende Daten, insbesondere nach deren Auslesen und deren Bearbeitung, überschrieben werden.

Zweckmäßigerweise wird ein Rücksetzen des Meldesignals vom kommunikationsseitigen Prozessor identifiziert, wodurch die Daten vom dynamischen Speicher in den statischen Speicher übertragen werden. Durch eine derartige auf der Kommunikationsseite ausgeführten Zwischenspeicherung und der anschließenden im Normalbetrieb ausgeführten Übertragung von vorangegangenen Daten und aktuellen Daten in den statischen Speicher ist eine fortlaufende, insbesondere chronologische Datenübertragung, ermöglicht. Dabei wird der steuerungsseitige Prozessor durch die dynamische Pufferverwaltung des kommunikationsseitigen Prozessors möglichst gut entlastet.

Vorteilhafterweise wird bei einem Zugriff des steuerungsseitigen Prozessors auf den statischen Speicher bei gleichzeitig gesetztem Meldesignal ein Zähler inkrementiert. Somit werden mittels des Zählers fehlgeschlagene Bausteinaufrufe, insbesondere fehlgeschlagene Zugriffe von Anwenderbausteinen auf den statischen Speicher, identifiziert. Vorzugsweise wird der Zähler auf Überschreiten eines Schwellwertes überwacht. Das Überschreiten des Schwellwertes wird zur Identifikation eines kritischen Zustands verwendet. Hierbei ist sicherzustellen, dass eine Speicherung von zu übertragenden Daten in den statischen Speicher sicher erfolgt und im Fehlerfall sicher unterbleibt. Dazu werden die Daten bei Überschreiten des Schwellwertes und somit im Fehlerfall im dynamischen Speicher zwischengespeichert. Mittels des kommunikationsseitigen Prozessors wird daher neben der Überwachung des Meldesignals auch der Schwellwert auf Überschreitung überwacht. Dies ermöglicht, dass sowohl bei überlasteter Speicherkapazität auf der Steuerungsseite als auch bei Fehlaufrufen von Bausteinen, welche Daten aus dem statischen Speicher auslesen, aktuell zu übertragende Daten sicher und fortlaufend in einen Zwischenspeicher hinterlegt werden.

Zweckmäßigerweise wird der Schwellwert vom steuerungsseitigen Prozessor zurückgesetzt. Somit ist gewährleistet, dass der kommunikationsseitige Prozessor erst dann wieder Daten in den statischen Speicher überträgt, wenn der steuerungsseitige Prozessor, insbesondere dessen statischer Speicher, zum Empfang von neuen zu übertragenden Daten bereit ist.

Die zweitgenannte Aufgabe wird erfindungsgemäß gelöst durch eine Vorrichtung zur Übertragung von Daten zwischen zwei Prozessoren einer Datenverarbeitungseinheit, wobei kommunikationsseitig einem der Prozessoren ein dynamischer Speicher und steuerungsseitig dem anderen Prozessor ein statischer Speicher zugeordnet sind, bei dem beim betreffenden kommunikationsseitigen Prozessor ein Analysemodul zur Identifikation eines Überschreitens der Kapazität des statischen Speichers vorgesehen ist, wobei bei Überschreiten der Kapazität des statischen Speichers das Analysemodul derart ausgebildet ist, dass die betreffenden Daten im dynamischen Speicher des kommunikationsseitigen Prozessors zwischengespeichert werden.

Bevorzugterweise ist das Analysemodul derart ausgebildet, dass bei Überschreiten der Kapazität des statischen Speichers ein Meldesignal gesetzt wird. Dies ermöglicht eine besonders dynamische Verwaltung der zu übertragenden Daten, insbesondere eine besonders sichere Übertragung der Daten ohne Datenverlust durch Überschreibung des bereits ausgelasteten statischen Speichers auf der Steuerungsseite. Durch die Zuordnung eines dynamischen Speichers eines bereits auf der Kommunikationsseite vorhandenen dynamischen Puffers ist ein zusätzlicher Speicher sicher vermieden. Zur Trennung des kommunikationsseitigen Prozessors vom steuerungsseitigen Prozessors sind diese vorzugsweise mittels einer Schnittstelle miteinander gekoppelt. Dabei sind der Schnittstelle der statische Speicher und das Meldesignal zugeordnet. Alternativ kann der statische Speicher im steuerungsseitigen Prozessorbaustein integriert sein. In einer bevorzugten Ausführungsform ist ein Zähler zum Zählen von Zugriffen des steuerungsseitigen Prozessors auf den statischen Speicher bei gesetztem Meldesignal vorgesehen.

Die mit der Erfindung erzielten Vorteile bestehen insbesondere darin, dass durch eine Zuordnung des dynamischen Speichers zum Zwischenspeichern von zu übertragenden Daten auf der Kommunikationsseite eine von der Steuerungsseite, insbesondere vom steuerungsseitigen statischen Speicher und Prozessor, unabhängige Datensicherung erfolgt. Darüber hinaus wird durch eine derartige Kombination eines steuerungsseitigen statischen Speichers und eines kommunikationsseitigen, dynamischen Speichers, der unabhängig von der Steuerungsseite adressiert und verwaltet wird, ein dynamischer Wechselpuffer gebildet. Hierdurch ist ein koordinierter, insbesondere chronologischer Empfang von Daten und deren chronologische Bearbeitung auf der Steuerungsseite mittels eines Anwenderprogramms sichergestellt. Ferner ist durch die Unterteilung eines auf der Kommunikationsseite bereits vorhandenen dynamischen Puffers zum Zwischenspeichern der zu übertragenden Daten eine besonders platzsparende und platzoptimierenden Datenverwaltung ermöglicht.

Ausführungsbeispiele der Erfindung werden anhand einer Zeichnung näher erläutert. Darin zeigen:
- FIG 1: schematisch eine Vorrichtung zur Übertragung von Daten mit zugehörigen Komponenten,
- FIG 2: ein Ablaufschema mit zur Durchführung des Verfahrens zur Übertragung von Daten zwischen zwei Prozessoren vorgesehenen Komponenten im Konfliktfall, und
- FIG 3: ein Ablaufschema mit den Komponenten nach Figur 1 für das Verfahren nach Behebung des Konfliktfalls.

Einander entsprechende Teile sind in allen Figuren mit den gleichen Bezugszeichen versehen.

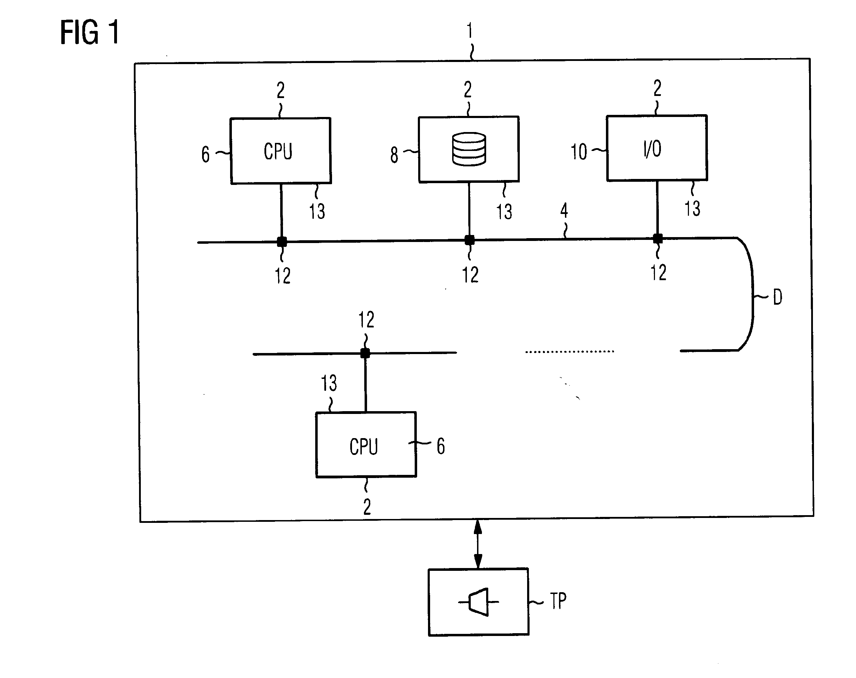

Der im Ausführungsbeispiel gemäß Figur 1 zugrunde gelegte Prozess kann ein technischer Prozess oder Anlagenprozess TP, zum Beispiel ein Kraftwerksprozess sein. Zur Steuerung und Regelung des Kraftwerksprozesses ist eine Datenverarbeitungsanlage 1 vorgesehen. Je nach Ausführungsform der Datenverarbeitungsanlage 1 umfasst diese mehrere Funktionseinheiten 2, die über eine Datenübertragungseinheit 4, zum Beispiel einen Datenbus, miteinander verbunden sind. Die Datenverarbeitungseinheit 1 umfasst dabei beispielsweise als Funktionseinheit 2 mindestens einen Zentralprozessor 6 (CPU = Central Processing Unit genannt) zur zentralen Datenverarbeitung, mindestens eine Speichereinheit 8 und/oder Ein-/Ausgabeeinheiten 10 zur Steuerung und/oder Regelung von Ein-/Ausgabekanälen. Die Funktionseinheiten 2 werden über die Datenübertragungseinheit 4 zu einem so genannten Rechnernetz zusammengeschaltet. Hierdurch ist es möglich, dass die verschiedenen Zentralprozessoren 6 sowie die Ein-/Ausgabeeinheiten 10 und die Speichereinheiten 8 Daten D miteinander austauschen. Die Datenübertragungseinheit 4 umfasst dabei nicht näher dargestellte Daten-, Adress- und Steuerleitungen, an welche die Funktionseinheiten 2 als so genannte Buskomponenten mittels mechanisch und elektrisch spezifizierten Schnittstellen 12 angekoppelt sind.

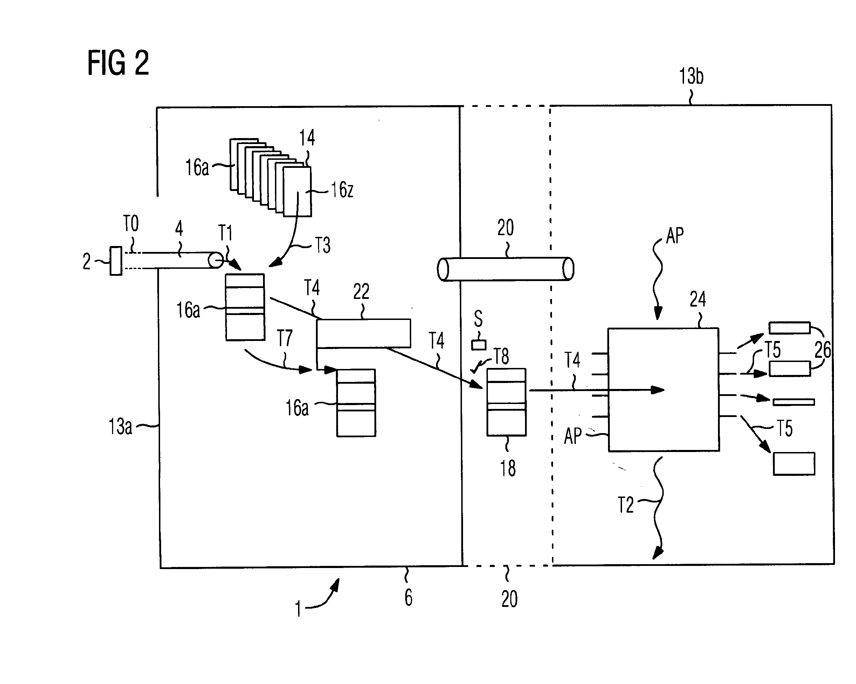

Die Funktionseinheiten 2 sind dabei derart ausgebildet, dass sie Datenübertragungen auslösen und steuern können. Bedingt durch eine derartige Vielzahl von an das Datenübertragungssystem 4 angekoppelten Funktionseinheiten 2 sowie der zunehmenden Anzahl von zu übertragenden Daten D weisen die Funktionseinheiten 2 sowohl für die Kommunikation als auch für die Steuerung zugehörige Prozessoren 13 auf. In der Figur 2 ist beispielhaft eine der Funktionseinheiten 2, der Zentralprozessor 6, mit dem zugehörigen kommunikationsseitigen Prozessor 13a und dem steuerungsseitigen Prozessor 13b dargestellt. Der die Kommunikation, das heißt die Datenübertragung ausführende Prozessor 13a dient somit dem Senden und Empfangen von Daten D, zum Beispiel zwischen einem lokalen und einem dezentralen Prozessor 6 und/oder einer anderen Funktionseinheit 2, zum Beispiel einer Ein-/Ausgabeeinheit 10 oder einer Speichereinheit 8 (= Schritt T0) Der die Steuerung ausführende Prozessor 13b dient insbesondere der Bearbeitung eines den Anlagenprozess steuernden und regelnden Anwenderprogramms AP (= Schritt T2) anhand der von anderen Funktionseinheiten 2 empfangenen Daten D. Eine derartige durch die Aufgabenteilung bedingte Prozessorstruktur hat zum Ziel, die Steuerung und/oder Regelung des Anlagenprozesses TP von der Datenkommunikation zu entkoppeln und somit die anlagenbezogene Steuerung zu entlasten und die Kommunikationsperformance zu erhöhen.

Der kommunikationsseitige Prozessor 13a weist zur Datenverwaltung der zu übertragenden Daten D einen dynamischen Hauptspeicher 14 auf. Der dynamische Hauptspeicher 14 repräsentiert einen Speicherraum mit fortlaufender Adresszählung und wahlfreiem Zugriff (= Random Access) auf eine Mehrzahl von dynamischen Speichern 16a bis 16z (= Schritt T3). Der steuerungsseitige Prozessor 13b umfasst zum Austausch der Daten D mit der externen Funktionseinheit 2 einen statischen Speicher 18. Als statischer Speicher 18 dient ein direkt adressierbarer Pufferspeicher, welcher im Vergleich zum dynamischen Hauptspeicher 14 des kommunikationsseitigen Prozessors 13a eine wesentlich kleinere Speicherkapazität aufweist.

Das im steuerungsseitigen Prozessor 13b ablaufende Anwenderprogramm AP dient der Steuerung des Anlagenprozesses TP. Dabei werden mittels des Anwenderprogramms AP über den statischen Speicher 18 und den dynamischen Speicher 16a Daten D mit dem externen Kommunikationspartner, insbesondere einer anderen Funktionseinheit 2, ausgetauscht (= Schritt T4). Das heißt es werden Daten D gesendet oder Daten D empfangen. Somit ist der statische Speicher 18 als Schreib-/Lesespeicher ausgebildet.

Je nach Art und Ausführung des steuerungsseitigen Prozessors 13b ist der zugehörige statische Speicher 18 im Prozessorbaustein integriert oder in einer separaten Schnittstelle 20, wie hier gestrichelt dargestellt, angeordnet. Bei der Schnittstelle 20 handelt es sich beispielsweise um einen so genannten dual-port RAM, auf welchen beide Prozessoren 13a und 13b, das heißt der kommunikationsseitige Prozessor 13a sowie der steuerungsseitige Prozessor 13b zugreifen können.

Im Normalbetrieb der Datenverarbeitungsanlage 1 werden von einer externen Funktionseinheit 2 Daten D über die Datenübertragungseinheit 4 an den kommunikationsseitigen Prozessor 13a (= Schritt T0) gesendet. Die Daten D werden mittels des kommunikationsseitigen Prozessors 13a in einen der dynamischen Speicher 16a des dynamischen Hauptspeichers 14 hinterlegt (= Schritt T1). Nachfolgende Daten D werden chronologisch in weitere betreffende dynamische Speicher 16b bis 16z hinterlegt (= Schritte T1, T3). Zur Datenverarbeitung mittels des steuerungsseitigen Prozessors 13b weisen die Empfangsdaten D Adressinformationen auf, welche mittels einer Analyseeinheit 22, zum Beispiel einer Bausteininstanz, auf der Kommunikationsseite bestimmt und dahingehend analysiert werden, dass ein die Daten D verarbeitender Empfangsbaustein oder Anwenderbaustein 24 des Anwenderprogramms AP identifiziert und mittels des statischen Speichers 18 mit dem dynamischen Speicher 16a verbunden wird (= Schritt T4). Dabei werden die empfangenen Daten D über die betreffende Verbindung in den statischen Speicher 18 kopiert, wobei während des Kopiervorgangs mittels des Analyseeinheit 22 ein Meldesignal S gesetzt wird. Anschließend wird der zum Empfang bereitgestellte dynamische Speicher 16a freigegeben, das heißt, insbesondere gelöscht und dem dynamischen Hauptspeicher 14 zum Empfang weiterer Daten D zugeordnet. Alternativ werden die vorangegangenen Daten D durch nachfolgende, aktuelle Daten D überschrieben.

Bei der Bearbeitung des Anwenderprogramms AP wird der betreffende Anwenderbaustein 24 aufgerufen, wobei die im statischen Speicher 18 hinterlegten Daten D entsprechend ihrer Adressinformation weiteren Anwenderobjekten 26, z. B. Datenbausteinen, zur Verarbeitung bereitgestellt werden (= Schritt T5).

Kommt es nun aufgrund einer Verzögerung der Bearbeitung des Anwenderprogramms AP im steuerungsseitigen Prozessor 13b zu einem so genannten Überlauf des statischen Speichers 18 kann es zu einem Überschreiben der Daten D im statischen Speicher 18 kommen, so dass diese ungültig beziehungsweise inkonsistent sind. Ein derartiges Überschreiten der Kapazität des statischen Speichers 18 wird mittels des betreffenden kommunikationsseitigen Prozessors 13a identifiziert. Mittels der Analyseeinheit 22 werden die empfangenen Daten D im dynamischen Speicher 16a des kommunikationsseitigen Prozessors 13a zwischengespeichert (= Schritt T7). Dazu wird der dynamische Speicher 16a vom kommunikationsseitigen Prozessor 13a adressiert. Darüber hinaus wird gleichzeitig bei Identifizierung des Überschreitens der Kapazität des statischen Speichers 18 ein Meldesignal S gesetzt (= Schritt T8). Mittels der Analyseeinheit 22 wird das Meldesignal S fortlaufend überwacht. Ist dieses gesetzt, werden die empfangenen Daten D fortlaufend in weiteren zur Zwischenspeicherung vorgesehenen dynamischen Speichern 16b bis 16z hinterlegt. Mit anderen Worten: Der kommunikationsseitige Prozessor 13a führt solange keine Übertragung von Daten D in den steuerungsseitigen statischen Speicher 18 aus, solange das Meldesignal S gesetzt ist. Dabei werden die aktuell empfangenen Daten D stets bei gesetzten Meldesignal S, das heißt sowohl bei einer Überschreitung der Kapazität des statischen Speichers 18 als auch bei Zugriff einer der beiden Prozessoren 13a, 13b auf den statischen Speicher 18, zwischengespeichert. Dabei werden die Daten D fortlaufend im dynamischen Speicher 16a bis 16z hinterlegt oder durch nachfolgende, aktuelle Daten D fortlaufend überschrieben.

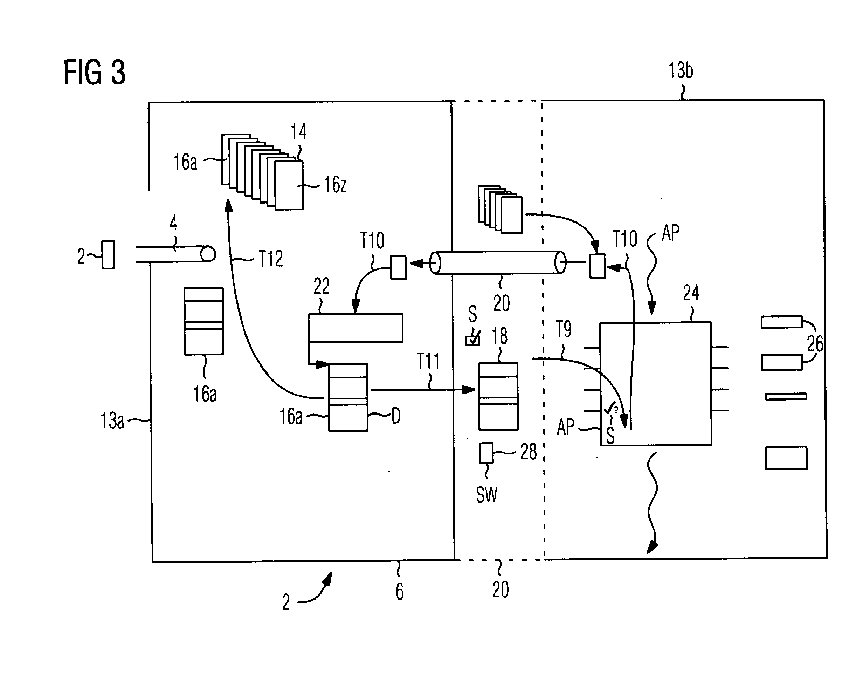

In der Figur 3 ist das Ablaufschema zur Konfliktbehebung dargestellt. Dabei wird mittels des Anwenderprogramms AP am Ende der Bearbeitung eines Anwenderbausteins 24 das Meldesignal S bestimmt (= Schritt T9). Für den Fall, dass das Meldesignal S gesetzt ist, wird nach Auslesen sämtlicher Daten D aus dem statischen Speicher 18 oder nach Aufhebung des Konfliktfalls mittels des steuerungsseitigen Prozessors 13b das Meldesignal S zurückgesetzt (= Schritt T10). Das Rücksetzen des Signals S bewirkt auf der Kommunikationsseite, dass die in dem dynamischen Zwischenspeicher 16a zwischengespeicherten Daten D in den statischen Speicher 18 übertragen werden (= Schritt T11). Nach erfolgter Übertragung der Daten D in den statischen Speicher 18 wird der betreffende dynamische Zwischenspeicher 16a dem dynamischen Hauptspeicher 14 zum Empfang weiterer Daten D wieder zugeordnet (= Schritt T12). Je nach Art und Ausführung der Datenverarbeitungsanlage 1 kann das Setzen und Rücksetzen des Meldesignals S mittels der die beiden Prozessoren 13a und 13b koppelnden Schnittstelle 20 ausgeführt werden.

Beispielsweise wird im Betrieb der Datenverarbeitungsanlage 1 ein gleichzeitiger Zugriff des Anwenderprogramms AP und des kommunikationsseitigen Prozessors 13a auf den statischen Speicher 18 mittels der Analyseeinheit 22 als Konfliktfall identifiziert. Dabei wird mittels der Analyseeinheit 22 das Meldesignal S gesetzt. In Abhängigkeit von der Art der vorgegebenen Konfliktbehebung wird das Meldesignal S nach Ablauf des Anwenderprogramms AP automatisch zurückgesetzt. Hierzu wird das Meldesignal S mittels der Analyseeinheit 22 fortlaufend überwacht. Nach Rücksetzung des Meldesignals S, welches einen freien Zugriff auf den statischen Speicher 18 repräsentiert, werden mittels der Analyseeinheit 22 die Daten D vom dynamischen Speicher 16a in den statischen Speicher 18 übertragen.
Alternativ wird nach Wegfall der Störung mittels der Schnittstelle 20 ereignisgesteuert eine Meldung M an den kommunikationsseitigen Prozessor 13a, insbesondere an die Analyseeinheit 22, gesendet (= Schritt T10). Anhand der Meldung M wird der Normalfall und somit die freie Schreibkapazität des statischen Speichers 18 identifiziert, so dass die Daten D vom dynamischen Speicher 16a in den statischen Speicher 18 geschrieben werden.

Zusätzlich kann für den Fall, dass bei der Bearbeitung eines der Anwenderbausteine 24 stets das Meldesignal S gesetzt ist, und somit der Zugriff des Anwenderbausteins 24 auf den statischen Speicher 18 gestört ist, ein Zähler 28 vorgesehen sein. Dabei wird der Zähler 28 bausteinbezogen stets dann inkrementiert, wenn das Meldesignal S für die Bearbeitung des betreffenden Anwenderbausteins 24 gesetzt ist.

Mittels der Analyseeinheit 22 wird bei einer Übertragung von Daten D für den betreffenden Anwenderbaustein 24 der zugehörige Zähler 28 auf Einhaltung eines Schwellwertes SW überwacht. Ist der Schwellwert SW überschritten, wird mittels des kommunikationsseitigen Prozessors 13a diesem der dynamische Speicher 16a zum Zwischenspeichern der Daten D für die Bearbeitung des betreffenden Anwenderbausteins 24 zugeordnet. Die Daten D werden so lange in dem dynamischen Zwischenspeicher 16a hinterlegt (s. Fig.2, Schritt T7), bis von der Steuerungsseite, das heißt vom steuerungsseitigen Prozessor 13b, der betreffende Zähler 28 zurückgesetzt wird. Hierdurch ist sichergestellt, dass im Fehlerfall auf der Steuerungsseite stets ein chronologischer Empfang von Daten D ermöglicht ist. Dazu werden die Daten D in dem zugehörigen dynamischen Speicher 16a bis 16z zeitlich und/oder logisch fortlaufend zwischengespeichert. Je nach Art und Aufbau des dynamischen Speichers 16a bis 16z wird alternativ ein vorgegebener Speicherbereich des dynamischen Speichers 16a bis 16z durch aktuelle Daten D überschrieben, so dass stets nur aktuelle Daten D zur Verarbeitung für den Anwenderbaustein 24 zur Verfügung stehen.

Im Normalbetrieb oder mit Rücksetzen des Meldesignals S oder des Zählers 28 werden die zwischengespeicherten Daten D in den statischen Speicher 18 zur Verarbeitung mittels des Anwenderprogramms AP übertragen. Somit ist eine nochmalige Übertragung der Daten D zwischen den externen Funktionseinheiten 2 nicht mehr erforderlich, wodurch die Datenübertragungseinheit 4 weitgehend entlastet wird. Darüber hinaus ist durch die Verwendung von bereits vorhandenen dynamischen Speichern 16a bis 16z des dynamischen Hauptspeichers 14 ein zusätzlicher Speicher nicht mehr erforderlich.

## Patentansprüche

1. Verfahren zur Übertragung von Daten (D) zwischen zwei Prozessoren (13a, 13b) einer Datenverarbeitungseinheit (2), wobei kommunikationsseitig einem der Prozessoren (13a) ein dynamischer Speicher (16a bis 16z) und steuerungsseitig dem anderen Prozessor (13b) ein statischer Speicher (18) zugeordnet werden, wobei vom betreffenden kommunikationsseitigen Prozessor (13a) ein Überschreiten der Kapazität des statischen Speichers (18) des anderen steuerungsseitigen Prozessors (13b) identifiziert wird und die betreffenden Daten im dynamischen Speicher (16a bis 16z) des kommunikationsseitigen Prozessors (13a) zwischengespeichert werden.

2. Verfahren nach Anspruch 1, bei dem der dynamische Speicher (16a bis 16z) vom kommunikationsseitigen Prozessor (13a) adressiert wird.

3. Verfahren nach Anspruch 1 oder 2, bei dem bei Überschreiten der Kapazität des statischen Speichers (18) oder bei Zugriff einer der Prozessoren (13a, 13b) auf den statischen Speicher (18) ein Meldesignal (S) gesetzt wird.

4. Verfahren nach Anspruch 3, bei dem das Meldesignal (S) vom steuerungsseitigen Prozessor (13b) ereignisgesteuert zurückgesetzt wird.

5. Verfahren nach Anspruch 3 oder 4, bei dem ein Rücksetzen des Meldesignals (S) vom kommunikationsseitigen Prozessor (13a) identifiziert wird, wodurch die Daten (D) vom dynamischen Speicher (16a bis 16z) in den statischen Speicher (18) übertragen werden.

6. Verfahren nach einem der Ansprüche 2 bis 5, bei dem bei einem Zugriff eines Anwenderbausteins (24) auf den statischen Speicher (18) bei gleichzeitig gesetztem Meldesignal (S) ein Zähler (28) inkrementiert wird.

7. Verfahren nach Anspruch 6, bei dem der Zähler (28) auf Überschreiten eines Schwellwertes (SW) überwacht wird.

8. Verfahren nach Anspruch 7, bei dem bei Überschreiten des Schwellwertes (SW) die Daten (D) im dynamischen Speicher (16a bis 16z) zwischengespeichert werden.

9. Verfahren nach Anspruch 7 oder 8, bei dem der Schwellwert (SW) vom steuerungsseitigen Prozessor (13b) zurückgesetzt wird.

10. Vorrichtung zur Übertragung von Daten (D) zwischen zwei Prozessoren (13a, 13b) einer Datenverarbeitungseinheit (2), wobei kommunikationsseitig einem der Prozessoren (13a) ein dynamischer Speicher (16a bis 16z) und steuerungsseitig dem anderen Prozessor (13b) ein statischer Speicher (18) zugeordnet sind, bei dem beim betreffenden kommunikationsseitigen Prozessor (13a) ein Analysemodul (22) zur Identifikation eines Überschreitens der Kapazität des statischen Speichers (18) vorgesehen ist, wobei bei Überschreiten der Kapazität des statischen Speichers (18) das Analysemodul (22) derart ausgebildet ist, dass dem kommunikationsseitigen Prozessor (13a) der dynamische Speicher (16a bis 16z) zum Zwischenspeichern der Daten (D) zugeordnet wird.

11. Vorrichtung nach Anspruch 10, bei der bei Überschreiten der Kapazität des statischen Speichers (18) oder bei einem Zugriff eines der Prozessoren (13a, 13b) auf den statischen Speicher (18) das Analysemodul (22) zum Setzen eines Meldesignals (S) ausgebildet ist.

12. Vorrichtung nach Anspruch 10 oder 11, bei der die Prozessoren (13a, 13b) mittels einer Schnittstelle (20) miteinander gekoppelt sind.

13. Vorrichtung nach einem der Ansprüche 11 oder 12, bei der der statische Speicher (18) und das Meldesignal (S) der Schnittstelle (20) zugeordnet sind.

14. Vorrichtung nach einem der Ansprüche 11 bis 13, bei der ein Zähler (28) zum Zählen der Zugriffe des steuerungsseitigen Prozessors (13b) auf den statischen Speicher (18) bei gesetztem Meldesignal (S) vorgesehen ist.
